# EUROPÄISCHE PATENTANMELDUNG

(11) **EP 1 764 470 A2**
(43) Veröffentlichungstag der Anmeldung: **21.03.2007**
(21) Anmeldenummer: 06116921.5
(22) Anmeldetag: 10.07.2006
(51) Int. Cl.: E06B 1/34, E06B 3/54

(54) **Beschlag zur Klemmbefestigung einer Glasscheibe**

(30) Priorität: 08.07.2005 DE 102005032063
(71) Anmelder: CASMA S.p.A., 20154 Milano (IT)
(72) Erfinder: Marinoni, Mirko, 20013, Magenta (IT)
(74) Vertreter: Viering, Jentschura & Partner

(57) **Zusammenfassung**

Die Erfindung betrifft einen Beschlag zur Klemmbefestigung einer Glasscheibe, insbesondere einer Oberlicht-Glasscheibe, mit zwei rechtwinklig abgewinkelten Klemmstücken(1, 2, 3), von deren einem Winkelschenkel eine Klemmplatte (10, 20, 30) gebildet wird und von deren anderem Winkelschenkel wenigstens eine Stegplatte (11, 21, 31) neben einer Aussparung gebildet wird, so dass die Klemmstücke (1, 2, 3) beidseitig der Glasscheibe (100) so zusammensetzbar sind, dass die Stegplatte (11, 21, 31) des einen Klemmstückes (1, 2, 3) der Klemmplatte (10, 20, 30) des anderen Klemmstückes (1, 2, 3) zugewandt ist. Die Stegplatten (11, 21, 31) der Klemmstücke (1, 2, 3) untergreifen jeweils die Klemmplatte (10, 20, 30) des anderen Klemmstückes (1, 2, 3), wobei in der Klemmplatte (10, 20, 30) eines der Klemmstücke (1, 2, 3) wenigstens eine Befestigungsvorrichtung angeordnet ist, die bis in den Eingriff in die Stegplatte (11, 21, 31) des anderen Klemmstückes (1, 2, 3) schraubverstellbar ist. Die Klemmstücke (1, 2, 3) werden als Abschnitte hergestellt, die von wenigstens einer durch Strangpressen, Warmziehen oder Kaltwalzen hergestellten L-Profilschiene abgeschnitten werden, die ein Profil haben, das demjenigen der Klemmstücke (1, 2, 3) entspricht.

## Beschreibung

Die Erfindung betrifft einen Beschlag zur Klemmbefestigung einer Glasscheibe, insbesondere einer Oberlicht-Glasscheibe.

Derartige Beschläge werden zum Klemmbefestigen von Glasscheiben für beispielsweise Oberlichter, Glastrennwände, für Balkone oder große Schauvitrinen oder dergleichen verwendet.

Aus dem DE-GM 94 20 766 ist beispielsweise ein Türflügelbeschlag mit zwei Klemmplatten bekannt, die an zwei voneinander abgewandten Seiten eines Glasflügels angelegt werden. Eine der beiden Klemmplatten weist eine senkrecht abgewinkelte Stegplatte auf, welche den unteren Rand des Glasflügels sowie die untere Kante der anderen Klemmplatte untergreift. Mindestens eine der beiden Klemmplatten weist zum Glasflügel hin vorstehende Vorsprünge auf, die in in dem Glasflügel ausgebildete Bohrungen eingreifen. Innerhalb der Vorsprünge befinden sich Befestigungsbohrungen, durch welche Schraubelemente hindurchgeführt werden, um die beiden Klemmplatten und den dazwischenliegenden Glasflügel kraft- und formschlüssig zu verbinden.

Ein anderer Beschlag zur Klemmbefestigung einer Glasscheibe ist aus dem Dokument DE 94 12 813 U1 bekannt, bei dem ein U-förmiger Klemmhalter mit wenigstens einer an wenigstens einem Schenkel des Halters vorgesehenen Klemmeinrichtung, die auf der Innenseite des Schenkels in Form wenigstens einer zu dem anderen Schenkel vorgewölbten Kunststoff-Feder für die Klemmbefestigung einer Glasplatte zwischen den beiden Schenkeln ausgebildet ist, und einer an dem Verbindungssteg zwischen den beiden Schenkeln angeordneten Einrichtung zur Anbringung des Klemmhalters an beispielsweise einer Wand.

Ein noch anderer Beschlag zur Klemmbefestigung einer Glasscheibe ist aus dem Dokument DE 82 05 101 U1 bekannt mit zwei Klemmbacken, die beidseits an einen Rand einer Glasplatte anlegbar sind, wobei eine der Klemmbacken einen vorstehenden, am freien Rand der Glasplatte anliegenden Ansatz aufweist und die andere Klemmbacke zwei den Ansatz einfassende Stege hat. Die Klemmbacken werden mittels zwei die eine Klemmbacke und die andere Klemmbacke im Bereich ihres Ansatzes senkrecht zur Glasplattenebene durchdringende Schrauben miteinander verbunden und damit an der Glasplatte befestigt.

Es ist eine Aufgabe der Erfindung, einen Beschlag zu schaffen, welcher relativ einfach herstellbar ist und welcher an verschieden dicke Glasscheiben anpassbar ist.

Dies wird erfindungsgemäß erreicht mit einem Beschlag zur Klemmbefestigung einer Glasscheibe, insbesondere einer Oberlicht-Glasscheibe, mit zwei rechtwinklig abgewinkelten Klemmstücken, von deren einem Winkelschenkel eine Klemmplatte gebildet wird und von deren anderem Winkelschenkel wenigstens eine Stegplatte neben einer Aussparung gebildet wird, so dass die Klemmstücke beidseitig der Glasscheibe so zusammensetzbar sind, dass die Stegplatte des einen Klemmstückes der Klemmplatte des anderen Klemmstückes zugewandt ist und die Stegplatten der Klemmstücke entlang der Klemmplatten nebeneinander angeordnet sind und jeweils die Klemmplatte des einen Klemmstückes von der Stegplatte des anderen Klemmstückes untergriffen wird, wobei in der Klemmplatte eines der Klemmstücke wenigstens eine Befestigungsvorrichtung angeordnet ist, die bis in den Eingriff in die Stegplatte des anderen Klemmstückes schraubverstellbar ist.

Aufgrund dieser Ausbildung der Klemmstücke, bei denen jeweils die Stegplatte des einen Klemmstückes einen freien unteren Rand der Klemmplatte des anderen Klemmstückes untergreift, kann mit dem erfindungsgemäßen Beschlag die Weite bzw. der Abstand zwischen den beiden Klemmplatten in Anpassung an die Dicke der Glasscheibe frei eingestellt werden und die Klemmstücke können mittels der Befestigungsvorrichtung in der wenigstens einen Klemmplatte, die mit zumindest einer Stegplatte des anderen Klemmstückes in Eingriff gelangt, in der gewählten bzw. eingestellten Lage aneinander fixiert werden. Die in Einbaulage einander zugewandten Stegplatten der Klemmstücke sind in Längsrichtung der Klemmplatten an diesen wechselweise derart angeordnet, dass im Wesentlichen jede Aussparung neben einer Stegplatte von einer Stegplatte des anderen Klemmstückes ergänzt wird, wobei ferner die Ränder an beiden Längsenden der einander gegenüberliegenden Klemmplatten in derselben Ebene senkrecht zur Glasscheibe liegen. Mit dem erfindungsgemäßen Beschlag können Glasscheiben stabil klemmbefestigt werden, ohne dass in den Glasscheiben Bohrungen oder an deren Rändern Ausschnitte zum Hindurchführen von Befestigungsschrauben ausgebildet werden müssen.

Gemäß einer bevorzugten Ausführungsform ist die Befestigungsvorrichtung in Form einer Schraubbefestigung ausgebildet, bei der wenigstens eine Schraube in eine sich parallel zur Klemmplatte des einen Klemmstückes erstreckende Gewindebohrung eingeführt ist und mit ihrem freien Ende in die Oberfläche der Stegplatte des anderen Klemmstückes eingreift, so dass die beiden Klemmstücke miteinander verspannt sind.

Vorzugsweise ist die Schraube, die in der sich durch die Klemmplatte parallel zu dieser erstreckenden Gewindebohrung aufgenommen ist, eine Madenschraube, die von der ihrer Stegplatte abgewandten Seite her mittels Werkzeug soweit eingeschraubt werden kann, bis diese klemmend in die Stegplatte eingreift. Dieser Eingriff kann beispielsweise dadurch erfolgen, dass das der entsprechenden Stegplatte zugewandte freie Ende der Schraube als spitzer Kegel ausgebildet ist, der sich in die Oberfläche der Stegplatte, die in diesem Fall aus weicherem Material ist als die Madenschraube, eingräbt, so dass die Klemmstücke lagefest aneinander festgelegt werden.

Gemäß einer Ausgestaltung dieser Ausführungsform ist in der Stegplatte eines der Klemmstücke eine Keil-Nutanordnung aus wenigstens einer parallel zur Klemmplatte verlaufenden Keilnute angeordnet, in die das freie Ende der Schraube eingreift, wobei die Schraube auch bei dieser Ausführungsform als in der Gewindebohrung einschraubte Madenschraube mit einem spitzen Endabschnitt ausgebildet sein kann. Durch das Eingreifen der Schraube in die wenigstens eine Keilnute können die Klemmstücke auf einfache Weise lagefest zueinander festgelegt werden. Ein besonderes vorteilhafter Effekt ergibt sich mittels der Keilnute ferner auch in der Weise, dass durch das Angreifen und nachfolgende Abstützen der Madenschraube an einer schrägen Flanke der Keilnute das Klemmstück, durch dessen Klemmplatte sich die Madenschraube senkrecht erstreckt, im Bereich seiner Klemmplatte leicht angehoben wird während die davon abstehende Stegplatte leicht nach unten geneigt wird, so dass die Klemmplatte aus ihrer im Wesentlichen senkrechten Position in eine leichte Schräglage verbracht wird, in der der obere freie Rand der Klemmplatte in Richtung zu der ihr gegenüberliegenden Klemmplatte leicht vorsteht, also zu dieser hin geneigt ist. Auf diese Weise kann die Klemmkraft, mit der der Beschlag an der Glasscheibe angreift, wesentlich erhöht werden.

Gemäß einer bevorzugten Weiterbildung weist die Keil-Nutenanordnung mehrere nebeneinander angeordnete parallel zur Klemmplatte verlaufende Keilnuten auf. Mit dieser Ausgestaltung wird ermöglicht, dass die Schraube, unabhängig davon, wie groß der Abstand zwischen den Klemmplatten gewählt wird, auf jeden Fall in eine der Keilnuten eingreifen kann, so dass die Klemmstücke aneinander in einer bestimmten Lage zueinander verklemmt werden können.

Gemäß einer anderen Ausgestaltung dieser Ausführungsform greift die Schraube in in der Stegplatte ausgebildete Bohransenkungen ein. Da die Bohransenkung ebenfalls von einer umlaufenden schrägen Fläche umgeben ist, an welcher die Schraube angreifen kann, ergeben sich auch bei dieser Alternative die vorgenannten Vorteile beim Positionieren und Befestigen der Klemmstücke aneinander.

Gemäß einer Weiterbildung der Erfindung weist jede der Klemmplatten wenigstens eine Gewindebohrung auf, in die eine Schraube eingeführt ist. Mit dieser Ausgestaltung ist es möglich, entweder am Montageort zu entscheiden, durch welche Klemmplatte hindurch am günstigsten bzw. am einfachsten die Schraube der Befestigungsvorrichtung zum Eingriff in die entsprechende Stegplatte einschraubbar ist, oder es kann entschieden werden, durch jeweils wenigstens eine Gewindebohrung jeder Klemmplatte hindurch eine Schraube zum Eingreifen in die entsprechende Stegplatte des jeweils anderen Klemmstückes einzuschrauben.

Gemäß einer anderen Ausgestaltung der Befestigungsvorrichtung weist die Befestigungsvorrichtung wenigstens eine Schraube auf, die in der Klemmplatte in einer sich parallel zur Stegplatte erstreckenden Gewindebohrung angeordnet ist und mit ihrem freien Ende einen Rollkörper in einer in der Klemmplatte ausgebildeten, mit der Gewindebohrung in Verbindung stehenden weiteren Bohrung in eine in der Stegplatte des anderen Klemmstückes ausgebildeten Keilnute oder Bohransenkung drückt, so dass die beiden Klemmstücke miteinander verspannt sind.

Diese Ausgestaltung hat den Vorteil, dass die Schraube, mittels der der Rollkörper innerhalb seiner Bohrung in Richtung zu der Stegplatte hin bewegt werden kann, während der Montage des Beschlages einfacher zugänglich ist, da die Schraube beispielsweise mit einem Schraubendreher betätigt werden kann, der senkrecht zur Klemmplatten-Klemmebene angesetzt werden kann. Vorzugsweise handelt es sich auch bei dieser Schraube um eine Madenschraube mit einem Kegel an ihrem freien Ende, mit welchem der Rollköper während des Einschraubens der Madenschraube allmählich in die Rollkörperbohrung hinein so weit verdrängt bzw. verschoben wird, bis die andere Seite des Rollkörpers in die Keilnute oder Bohransenkung der entsprechenden Stegplatte des anderen Klemmstückes eingreift.

Gemäß einer Weiterbildung der Erfindung weist die Stegplatte des einen Klemmstückes eine Längsnute auf, in die ein entsprechender Ansatz in dem anderen Klemmstück eingreift.

Die Längsnute in der Stegplatte kann vorzugsweise an einem quer zur Klemmplatte verlaufenden Rand der Stegplatte ausgeformt sein, an dem eine Stegplatte des anderen Klemmstückes mit ihrem Rand angrenzt, wobei der entsprechende Ansatz des anderen Klemmstückes vorzugsweise an diesem angrenzenden Rand angeformt und zum zusammenwirken mit der Längsnute komplementär zu dieser ausgebildet ist, wobei der Ansatz in der Längsnute quer zur Klemmplattenebene verschiebbar ist. Alternativ dazu kann die Längsnute in der Stegplatte auch etwa mittig in deren Oberseite ausgebildet sein und der Ansatz des anderen Klemmstückes kann zum Eingriff in die Längsnute an der der Stegplatte zugewandten Unterseite der Klemmplatte angeformt sein. Mittels der Längsnute und dem in diese eingreifenden Ansatz wird vorteilhaft eine Führung zwischen den beiden Klemmstücken während ihrer Montage geschaffen.

Gemäß einer anderen bevorzugten Ausgestaltung weist die Stegplatte eine Aussparung auf, deren parallel zur Klemmplatte des anderen Klemmstückes verlaufende Kante als Anschlag an diesem Klemmstück dient. Mittels dieser von der Aussparung gebildeten freien Kante, die an einen den Anschlag gestaltenden Klemmplattenwandabschnitt anschlagen kann, wird das maximale Ineinanderschieben begrenzt. Ferner wird damit ein Führungs- bzw. Ausrichtemittel geschaffen, mittels dessen ein Ausrichten und Halten der beiden Klemmstücke in einer gewünschten Lage zueinander bereits vor dem Schraubverstellen der Befestigungsvorrichtung erzielt werden kann, wodurch das anschließende Einschrauben der Schraube der Befestigungsvorrichtung in eine entsprechende Keilnute oder Bohransenkung erleichtert wird.

Gemäß einer Ausgestaltung der einen Ausführungsform sind in der Klemmplatte wenigstens zwei Gewindebohrungen angeordnet, deren Schraubachsen in zwei in Querrichtung der Klemmplatte gegeneinander versetzten Ebenen verlaufen, wobei die beiden Ebenen einen Abstand voneinander haben, der kleiner ist, als die Öffnungsweite der Keilnute. Die in die Gewindebohrungen einschraubbaren Schrauben weisen auch bei dieser Ausgestaltung ein kegel- oder kegelstumpfförmiges freies Ende auf, mit welchem die Schrauben in die Keilnute eingreifen. Da der Abstand zwischen den beiden Gewindebohrungen in Klemmplattenquerrichtung geringer ist als die Öffnungsweite der Keilnuten, ist es möglich, dass beide Schrauben in dieselbe Keilnute eingreifen können, wobei das eine Schraubenende mit seiner schrägen Mantelfläche an der einen schrägen Flanke der Keilnute angreifen kann, während das andere Schraubenende mit seiner schrägen Mantelfläche an der anderen Flanke derselben Keilnute klemmend angreifen kann. Es ist bei dieser Ausgestaltung aber auch möglich, dass eine Schraube an einer schrägen Flanke der einen Keilnute angreifen kann, während die andere Schraube mit an einer schrägen Flanke einer anderen, benachbarten Keilnute klemmend angreifen kann. Vorzugsweise wird mit dem Einschrauben zunächst der einen Schraube an eine schräge Flanke einer Keilnute das Klemmstück und damit insbesondere deren Klemmplatte in die vorgenannte leichte Schräglage und damit verbesserte Klemmposition (relativ zu der Glasscheibe bzw. der gegenüberliegenden Klemmplatte) gebracht und mit dem Einschrauben der zweiten Schraube werden die beiden Klemmstücke endgültig aneinander fixiert, so dass erreicht wird, dass die beiden Klemmstücke derart gegeneinander fixiert sind, dass ein Auseinandergleiten der Klemmstücke verhindert ist.

Gemäß einer Ausgestaltung der anderen alternativen Ausführungsform sind in der Klemmplatte wenigstens zwei Schrauben in zwei in Querrichtung der Klemmplatte gegeneinander versetzten Ebenen angeordnet sind, wobei die beiden Ebenen einen Abstand voneinander haben, der kleiner als der Durchmesser aber größer als der halbe Durchmesser der Öffnungsweite der keilförmigen Bohransenkung ist. Auch hierbei weisen die in die Gewindebohrungen einschraubbaren Schrauben ein kegel- oder kegelstumpfförmiges freies Ende auf, mit welchem die zwei Schrauben in die keilförmige Bohransenkung eingreifen. Da der Abstand zwischen den beiden Gewindebohrungen in Klemmplattenquerrichtung geringer als der Durchmesser aber größer als der halbe Durchmesser der Öffnungsweite der keilförmigen Bohransenkung ist, ist es möglich, dass beide Schrauben in dieselbe Bohransenkung eingreifen können, wobei die beiden Schrauben so in dieselbe keilförmige Bohransenkung eingreifen, dass das eine Schraubenende mit seiner schrägen Mantelfläche an einem Abschnitt der schrägen Umfangswand der Bohransenkung klemmend angreifen kann, während das andere Schraubenende mit seiner schrägen Mantelfläche an einem anderen, gegenüberliegenden Abschnitt der schrägen Umfangswand der Bohransenkung klemmend angreifen kann. Es ist aber auch möglich, dass die beiden leicht gegeneinander versetzten Schrauben auch jeweils in eine separate Bohransenkung in der Stegplatte eingeschraubt werden, wobei die beiden Bohransenkungen jedoch in der gleichen Ebene angeordnet sind, so dass die eine Schraube beispielsweise an jenem Flankenabschnitt der entsprechenden Bohransenkung angreifen kann, der dem freien Ende der Stegplatte zugewandt ist, und damit die entsprechende Klemmplatte in die beschriebene Schräglage bringen kann, und die andere Schraube, die in der relativ zur Klemmfläche nach vorn versetzten Ebene eingeschraubt wird, beispielsweise an einem Flankenabschnitt der entsprechenden anderen Bohransenkung angreifen kann, der von dem freien Ende der Stegplatte abgewandt ist. Aufgrund dieser Zwei-Punkt-Befestigung sind die zwei Klemmstücke zueinander sicher und unverrückbar gehalten. Vorzugsweise wird mit dem Einschrauben zunächst der einen Schraube in eine Bohransenkung das Klemmstück und damit insbesondere deren Klemmplatte in die vorgenannte leichte Schräglage und damit verbesserte Klemmposition (relativ zu der Glasscheibe bzw. der gegenüberliegenden Klemmplatte) gebracht und mit dem Einschrauben der zweiten Schraube werden die beiden Klemmstücke endgültig aneinander fixiert.

Gemäß einer bevorzugten Weiterbildung der Erfindung weist das eine der Klemmstücke zwei Stegplatten auf, die in Längsrichtung des Klemmstückes gegeneinander versetzt sind, wobei die Stegplatte des anderen Klemmstückes in den Zwischenraum zwischen den beiden Stegplatten eingreift. Gegenständlich bedeutet das, dass das eine Klemmstück zwei vorzugsweise symmetrisch angeordnete Stegplatten aufweist, die sich jeweils von dessen Längsende zu dessen Mitte hin erstrecken und zwischen sich die Aussparung aufweisen und das andere Klemmstück seine Stegplatte im mittleren Abschnitt aufweist, wobei beidseitig neben der Stegplatte jeweils eine Aussparung ausgebildet ist, so dass die eine Stegplatte des einen Klemmstückes in den Zwischenraum, das heißt in die Aussparung, zwischen den beiden Stegplatten des anderen Klemmstückes eingreifen kann, während die beiden Stegplatten des anderen Klemmstückes in die Aussparungen jeweils neben der einen Stegplatte eingreifen. Alternativ dazu ist es aber auch möglich, an jedem der Klemmstücke nur eine Stegplatte so auszubilden, dass im montierten Zustand die jeweils eine Stegplatte die Aussparung neben der jeweils anderen Stegplatte ergänzt bzw. ausfüllt. Das bedeutet, dass der Beschlag aus zwei völlig gleich ausgebildeten Klemmstücken bestehen kann.

Gemäß einer weiteren Ausgestaltung der Erfindung sind alle Stegplatten mit einer Keil-Nutenanordnung aus mehreren parallel in den Stegplatten verlaufenden Keilnuten versehen. Somit ist die Möglichkeit geschaffen, dass für jede in die Klemmplatten eingeschraubte Schraube bzw. für jeden der Rollkörper eine zum Eingreifen geeignete Keilnute vorgesehen ist.

Gemäß einer bevorzugten Ausgestaltung haben die Keilnuten in jeder Stegplatte des einen Klemmstückes eine andere Öffnungsweite als die Keilnuten in jeder Stegplatte des anderen Klemmstückes. Mittels der unterschiedlich weiten Keilnuten kann eine Feineinstellung des Abstandes zwischen den beiden Klemmstücken bzw. zwischen deren Klemmplatten erreicht werden.

Vorzugsweise ist bei dem erfindungsgemäßen Beschlag, bei dem zwischen den Klemmplatten eine Glasscheibe eingesetzt ist, jeweils zwischen der Klemmplatte und der Glasscheibe eine Distanzplatte angeordnet. Mittels derartigen Distanzplatten können mögliche Zwischenräume zwischen den Klemmplatten und der Glasscheibe überbrückt werden, so dass die Glasscheibe fest zwischen den Klemmplatten eingeklemmt werden kann. Es ist auch möglich, anstatt nur einer Distanzplatte auf der einen oder der anderen Glasscheibenseite zwei oder mehrere Distanzplatten anzuordnen.

Gemäß einer bevorzugten Ausgestaltung sind die Distanzplatten aus einem komprimierbaren Kunststoff hergestellt, so dass die Klemmwirkung weiter verbessert werden kann. Ferner hat das Einfügen von solchen Distanzplatten den Vorteil, dass die Klemmplatten, die vorzugsweise aus Metall sind, nicht direkt an der Glasscheibe anliegen. Außerdem können damit Ungleichmäßigkeiten ausgeglichen werden, die sich möglicherweise dadurch ergebe, dass die beiden einander zugewandten Klemmflächen der beiden Klemmplatten nicht genau parallel verlaufen.

Gemäß einer Weiterbildung der Erfindung sind die nach außen weisenden Flächen der Klemmplatten mit einer Abdeckkappe abgedeckt. Die Abdeckkappe wird nach der Montage der Klemmstücke auf die Klemmplatten aufgeschoben oder aufgesteckt, und deckt somit alle in den Klemmplatten ausgebildeten Gewindebohrungen ab, so dass diese vor Eindringen von Schmutz geschützt werden. Vorzugsweise ist die Abdeckkappe aus einem Blech mit drei abgekanteten Randabschnitten hergestellt, wobei die seitlichen Randabschnitte beispielsweise klemmend an den beiden seitlichen Schmalseiten der Klemmplatte anliegen können.

Gemäß einer weiteren Ausgestaltung der Erfindung ist eine der Stegplatten an einem Rahmenteil einer Tür oder eines Fensters befestigt. Mit dieser Befestigung kann der Beschlag zum Klemmbefestigen von z.B. einem Oberlicht verwendet werden.

Gemäß einer anderen Ausgestaltung ist eine der Stegplatten am Fußboden oder an der Decke eines Raumes befestigt. Mit dieser Befestigung kann der Beschlag zum Klemmbefestigen von z.B. einer Glastrennwand in einem Raum verwendet werden.

Gemäß einer bevorzugten Ausgestaltung sind die Klemmstücke des Beschlages aus Aluminium hergestellt. Sie können aber auch in Abhängigkeit ihres Anwendungszwecks aus einem anderen Metall, einer Metallverbindung oder aus hochfestem Kunststoff hergestellt werden.

Ferner betrifft die Erfindung ein Verfahren zum Herstellen eines Beschlages zur Klemmbefestigung einer Glasscheibe, insbesondere einer Oberlicht-Glasscheibe, wobei der Beschlag zwei rechtwinklig abgewinkelte Klemmstücke hat, von deren einem Winkelschenkel eine Klemmplatte und von deren anderem Winkelschenkel wenigstens eine Stegplatte gebildet wird, über welche die Klemmplatte in ihrer Längsrichtung entlang einer Aussparung des anderen Winkelschenkels hinausragt, so dass die Klemmstücke beidseitig der Glasscheibe so zusammensetzbar sind, dass die Stegplatte des einen Klemmstückes der Klemmplatte des anderen Klemmstückes zugewandt ist und die Stegplatten der Klemmstücke entlang der Klemmplatten nebeneinander angeordnet sind und die Klemmplatte des einen Klemmstückes von der Stegplatte des anderen Klemmstückes in einer Aussparung der Klemmplatte untergriffen wird, dadurch gekennzeichnet, dass die Klemmstücke als Abschnitte hergestellt werden, die von wenigstens einer durch Strangpressen, Warmziehen oder Kaltwalzen hergestellten L-Profilschiene abgeschnitten werden, die ein Profil haben, das demjenigen der Klemmstücke entspricht, wobei die Aussparungen vor oder nach dem Abschneiden der Abschnitte durch Ausstanzen oder Ausschneiden hergestellt werden.

Vorzugsweise kann das (Vor-) Fertigen der Klemmstücke erfolgen zunächst durch

Schritt (1) : bei dem mittels eines vorzugsweise senkrecht geführten Werkzeugs für eine Mehrzahl von Klemmstücken aus einem horizontal angeordneten Schenkel des L-Profils mehrere Ausschnitte an vorbestimmten Stellen ausgestanzt werden (die die Aussparungen zwischen bzw. zwischen und neben den künftigen Stegplatten bilden) und gleichzeitig die Senklöcher (26) in die entsprechenden Material-Abschnitte (die Stegplatten bilden) gestanzt werden; und dann durch

Schritt (2): bei dem der die Ausschnitte aufweisende Schenkel des L-Profils vertikal angeordnet wird und ein vorzugsweise vertikal geführtes Werkzeugs die beiden Schenkel jeweils an den die Seitenränder der Klemmstücke bildenden Stellen durchtrennt und gleichzeitig die Materialabschnitte zwischen den beiden Stegplatten aus dem horizontal angeordneten Schenkel ausstanzt (die dann von den Stegplatten des anderen zugeordneten Klemmstücks untergriffen werden).

Gemäß einer Ausgestaltung des Verfahrens wird bei der Herstellung wenigstens einer der L-Profilschienen in deren die Stegplatte bildenden Profilschenkel wenigstens eine Keilnute parallel zur Klemmplatte ausgebildet.

Anhand der beigefügten Zeichnung werden nachfolgend einige Ausführungsformen gemäß der Erfindung näher erläutert. Die Zeichnung zeigt in
Fig. 1 eine Ausführungsform eines erfindungsgemäßen Beschlages mit zwei gleichen Klemmstücken;
Fig. 2 eine Ausführungsform eines erfindungsgemäßen Beschlages mit zwei unterschiedlich ausgebildeten Klemmstücken;
Fig. 3 eine Ausführungsform der Befestigungsvorrichtung;
Fig. 4 eine andere Ausführungsform der Befestigungsvorrichtung;
Fig. 5A eine andere Ausgestaltung des Beschlages gemäß Figur 2;
Fig. 5B bis Fig. 5E jeweils eine schematische Darstellung des Beschlages gemäß Figur 5A mit jeweils anders eingestellter Klemmweite;
Fig. 6 eine weitere andere Ausgestaltung des Beschlages gemäß Figur 2;
Fig. 7 eine noch andere Ausgestaltung des Beschlages gemäß Figur 2;
Fig. 8 eine andere Ausgestaltung des Beschlages gemäß Figur 1.

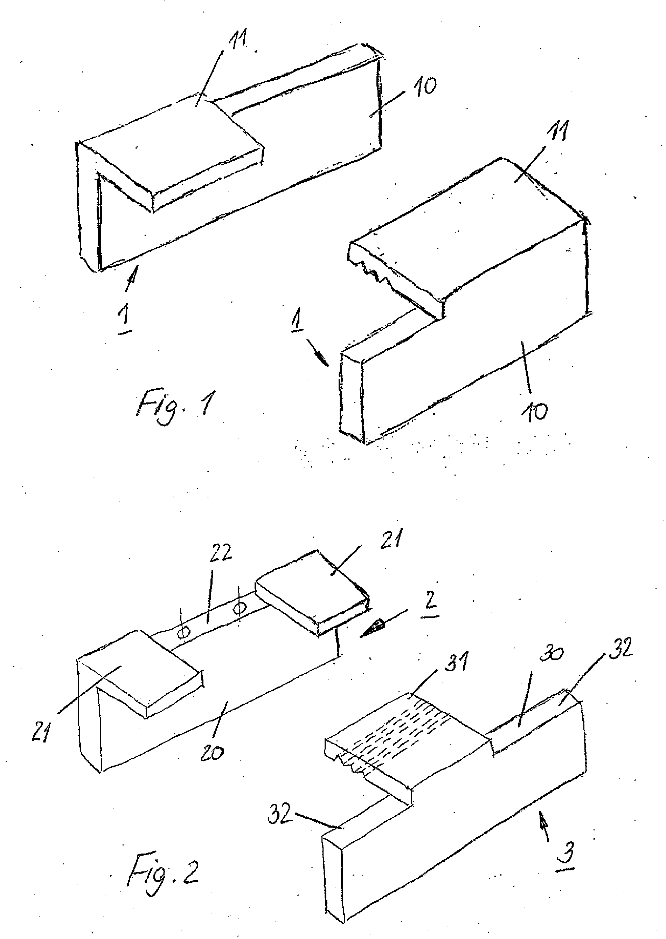

In Figur 1 ist eine Ausführungsform eines erfindungsgemäßen Beschlages zur Klemmbefestigung einer Glasscheibe mit zwei gleichen Klemmstücken 1 dargestellt. Jedes der Klemmstücke 1 ist ein Abschnitt eines L-Profils, der eine ebene Klemmplatte 10 und eine davon rechtwinklig abgewinkelte Stegplatte 11 aufweist, neben der jeweils eine Aussparung gebildet ist, die beispielsweise durch Abschneiden eines Stegabschnittes in zwei Schneidschritten hergestellt werden kann. Einer der Schnitte erfolgt dabei quer zur Längserstreckung des entsprechenden L-Schenkels, so dass dieser zunächst geteilt wird, und mit einem zweiten Schnitt in der Stoßkante zwischen den beiden L-Schenkeln entlang der nach innen gewandten Fläche der dann übrig bleibenden Stegplatte 11. Wie in Figur 1 ersichtlich ist, werden die beiden Klemmstücke 1 beidseitig einer Glasscheibe (nicht dargestellt) so zusammengesetzt, das die Stegplatte 11 des einen Klemmstückes 1 der Klemmplatte 10 des anderen Klemmstückes 1 zugewandt ist, so dass im montierten Zustand die beiden Stegplatten 11 nebeneinander angeordnet sind und gemeinsam einen Quersteg ausbilden, an dem die Glasscheibe mit einem freien Rand abgestützt sein kann. Im montierten Zustand dieser beiden Klemmstücke übergreift (in dieser Darstellung) jede der Stegplatten 11 die Klemmplatte 10 des jeweiligen anderen Klemmstückes 1.

Der Beschlag gemäß Figur 2 weist zwei unterschiedlich geformte Klemmstücke 2, 3 auf, die ebenfalls Abschnitte aus einem L-Profil sind. Im Unterschied zur Ausführungsform gemäß Figur 1 weist hierbei das eine Klemmstück 2 zwei symmetrisch angeordnete Stegplatten 21 auf, die im rechten Winkel von ihrer Klemmplatte 20 abstehen. Zwischen den beiden Stegplatten 21 ist eine Aussparung ausgebildet, in die die Stegplatte 31 des dazu passenden Klemmstückes 3 im montierten Zustand eingreift. Das Klemmstück 3 seinerseits weist an seinem mittleren Abschnitt die Stegplatte 31 auf, neben der zu beiden Seiten jeweils eine Aussparung vorhanden ist, die von den beiden Stegplatten 21 des Klemmstückes 2 ausgefüllt werden, wobei der freie Endabschnitt der Stegplatte 31 in Anlage mit der freien Unterseite 22 der Klemmplatte 20 gelangt und die jeweiligen freien Endabschnitte der Stegplatten 21 in Anlage mit der entsprechenden Unterseite 32 der Klemmplatte 30 gelangen.

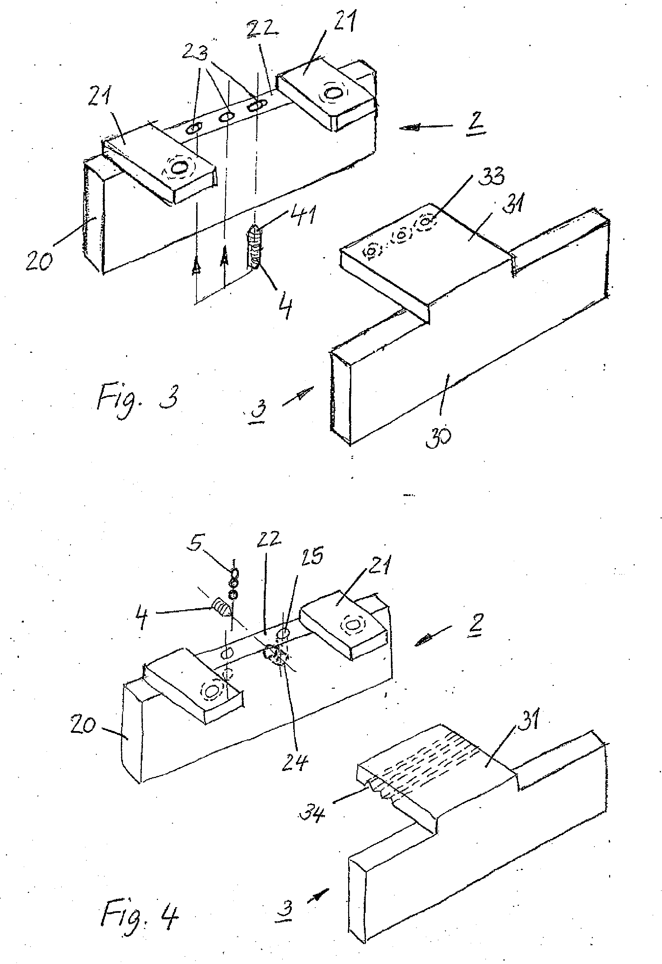

Der Beschlag gemäß Figur 3 entspricht im Wesentlichen dem Beschlag gemäß Figur 2 mit dem einzigen Unterschied, dass sich beim Klemmstück 2 die beiden außen angeordneten Stegplatten 21 nicht bis zu dem jeweiligen äußeren Seitenrand der Klemmplatte 20 erstrecken.

Die Befestigungsvorrichtung zum Befestigen der beiden Klemmstücke 2, 3 miteinander weist bei dieser Ausführungsform drei Gewindebohrungen 23 auf, die sich parallel zu der Klemmplatte 20 durch die Klemmplatte 20 hindurch erstrecken. In die Gewindebohrungen 23 wird jeweils eine Madenschraube 4 so weit eingeschraubt, bis deren freies Ende 41, das von einem spitz zulaufenden Kegel gebildet wird, aus der Unterseite 22 der Klemmplatte 20 herausragt und jeweils in eine Bohransenkung 33, die in der Stegplatte 31 des Klemmstückes 3 ausgebildet sind, eingreift. Bei der Ausführungsform gemäß Figur 3 sind drei solche Gewindebohrungen 23 in der Klemmplatte 2 und in der Stegplatte 31 des anderen Klemmstückes drei dazu passende Bohransenkungen 33 ausgebildet, wobei das Befestigen der Klemmstücke 2 und 3 auch mittels einer oder zwei solcherart ausgebildeter Befestigungsvorrichtungen erzielt werden kann.

Eine anders gestaltete Befestigungsvorrichtung ist in der Figur 4 dargestellt. Bei dieser Befestigungsvorrichtung ist wenigstens eine Madenschraube 4 vorgesehen, die in eine sich parallel zu ihren Stegplatten 21 erstreckende Gewindebohrung 24 eingeschraubt wird. Mit der Gewindebohrung 24 steht eine Bohrung 25 in Verbindung, die sich parallel zur Ebene der Klemmplatte 20 in dieser erstreckt und zumindest an der Unterseite 22 der Klemmplatte 20 offen ist. In dieser Bohrung 25 ist ein Rollkörper 5 aufgenommen, der bei dieser Ausführungsform von einem Kugelkettenabschnitt gebildet wird und beispielsweise mittels einer Federanordnung in der Bohrung 25 gegen Herausfallen aus dieser abgestützt ist. Wenn die Schraube 4 in die Gewindebohrung 24 eingeschraubt wird und beginnt, in die Bohrung 25 einzugreifen, drückt die Schraube zunächst mit ihrem spitzen freien Ende gegen das der Schraube 4 zugewandte Ende des Rollkörpers 5. Beim weiteren Einschrauben der Schraube 4 drückt die Schraube 4 mit ihrem zunehmend größer werdenden Kegeldurchmesser an ihrem freien Ende den Rollkörper 5 gegen die Kraft der Federanordnung in der Bohrung 25 so weit nach unten, dass dessen freies Ende schließlich aus der Bohrungsöffnung an der Unterseite 22 der Klemmplatte 22 hinausgeschoben wird und in eine Keilnute 34 eingreift, die in der an der Unterseite 22 anliegenden Stegplatte 31 ausgebildet ist. Es versteht sich, dass anstelle der Keilnuten 34 auch Bohransenkungen ausgebildet sein können, in die der Rollkörper 5 zum Herstellen der Befestigung eingreift. Bei der Ausführungsform gemäß der Figur 4 wurde eine Befestigungsvorrichtung mit einem Rollkörper 5 beschrieben. Es können jedoch auch mehrere derartige Befestigungsvorrichtungen nebeneinander angeordnet werden.

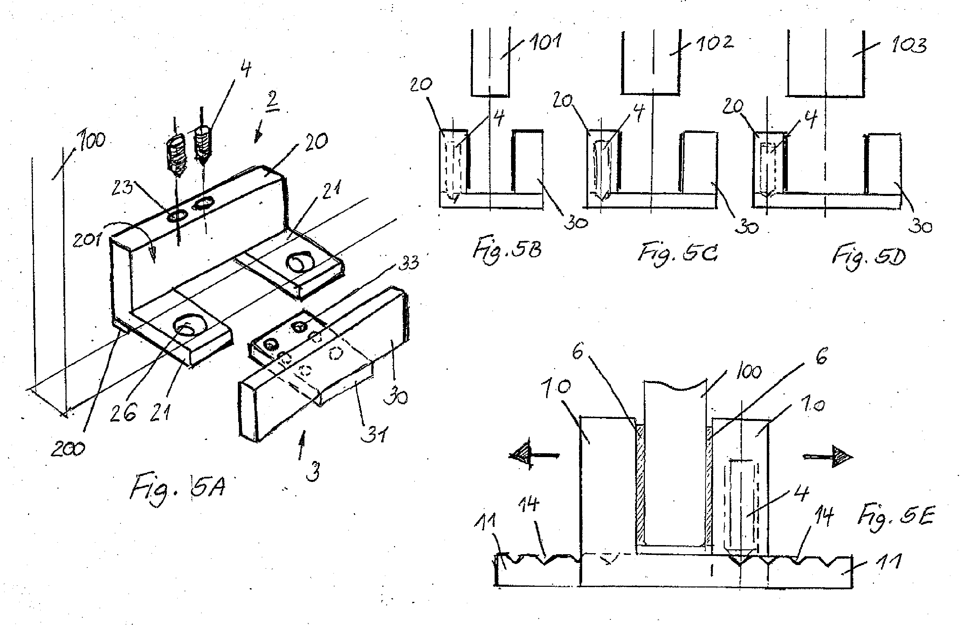

In der Figur 5A ist der Beschlag ähnlich jenem gemäß der Figur 2 dargestellt, zwischen dessen Klemmstücke 2 und 3 eine Glasscheibe 100 eingeklemmt werden kann. Wie ersichtlich ist, sind in der Klemmplatte 20 des Klemmstückes 2 zwei Gewindebohrungen 23 vorgesehen, in die die Madenschrauben 4 eingeschraubt werden. In der Stegplatte 31 des Klemmstückes 3 sind drei Reihen mit jeweils zwei nebeneinander angeordneten Bohransenkungen 33 ausgebildet, wobei die zwei Madenschrauben 4 jeweils in zwei Bohransenkungen 33 einer Reihe zum Klemmbefestigen der Glasscheibe 100 eingreifen. Ferner ist in den Stegplatten 21 des Klemmstückes 2 jeweils eine Senkbohrung 26 ausgebildet, in welchen jeweils eine Schraube mit ihrem Senkkopf aufgenommen wird, mittels denen das Klemmstück 2 beispielsweise an einen Rahmen einer Tür angeschraubt wird.

Gemäß einer vorteilhaften Ausgestaltung kann das Klemmstück 2 im Bereich der Stegplatten 21 senkrecht unterhalb der Klemmplatte 20 mit einem ebenen oder ballig gestalteten Ansatz 200 versehen sein, so dass das Klemmstück 2 relativ zu einer ebenen Auflagefläche eine in Pfeilrichtung 201 geneigte Position einnimmt. In dieser Lage verläuft die Klemmplatte 20 relativ zu der Glasscheibe 100 nicht parallel, sondern ist mit seinem oberen Klemmplattenrand näher an der Glasscheibe 100 als mit seinem unteren Klemmplattenrand, von dem sich die Stegplatten 21 erstrecken. Durch die leichte Schräglage der Klemmplatte 20, die an der Glasscheibe 100 klemmend angreift, kann eine höhere Klemmwirkung erzielt werden, als mit einer ganzflächig (parallel) an der Glasscheibe 100 anliegenden Klemmplatte 20. Mittels dieses Ansatzes 200 kann die gleiche verbesserte Klemmwirkung erzielt werden wie bei den vorgenannten Ausgestaltung, bei denen die Klemmstücke und damit die Klemmplatten mittels der an den Flanken der Keilnuten anreifenden Schrauben in einen solche Schräglage verbracht werden. Zum Erreichen der Schräglage der Klemmplatte kann anstelle eines an das Klemmstück einstückig angeformten ebenen oder ballig gestalteten Ansatzes 200 auch ein Blechstreifen unter die Stegplatten 21 im Bereich unterhalb der Klemmplatte 20 untergelegt werden, bevor das Klemmstück 2 mittels der die Senkbohrungen 26 durchgreifenden Schrauben an seiner vorbestimmten Montagestelle fest angeschraubt wird. Wesentlich verbesserte Klemmwirkungen werden beispielsweise bereits beim Unterlegen eines Blechstreifens mit 0,2 mm Dicke erreicht. Als Alternative zu dem Ansatz 200 ist es jedoch auch möglich, die Klemmplatte selbst so auszugestalten, dass die der Glasscheibe zugewandte Klemmfläche und die ebene Stegplatte einen Winkel von weniger als 90° einschließen. Eine einfache Methode dies zu erreichen, besteht darin, dass die Klemmplatte von der Stegplatte her nach oben hin allmählich dicker wird. Der Ansatz 200, der untergelegte Blechstreifen bzw. die Dickenzunahme der Klemmplatte von unten nach oben wurde anhand des Ausführungsbeispiels gemäß Figur 5A erläutert. Diese vorteilhaften Maßnahem sind aber auch auf die anderen Ausführungsbeispiele bzw. Beschlaggestaltungen übertragbar.

Die mehreren Reihen Bohransenkungen 33 sind zu dem Zweck ausgebildet, den Beschlag für unterschiedlich dicke Glasscheiben verwenden zu können. Anhand der Figuren 5B bis 5D ist schematisch dargestellt, wie die Klemmstücke 2 und 3 an die Dicke der jeweiligen Glasscheibe angepasst sind. So wird in Figur 5B zwischen den beiden Klemmplatten 20 und 30 eine Glasscheibe 101 eingeklemmt, die im Vergleich zwischen den drei Darstellungen die geringste Dicke hat. Das bedeutet, dass die zwei Madenschrauben 4 in die Bohransenkungen der Stegplatte 31 eingreifen, die der Klemmplatte 30 am nächsten sind. Bei der Darstellung in Figur 5C hingegen greifen die Madenschrauben 4 in die mittlere der drei Reihen Bohransenkungen ein, um eine mittelstarke Glasscheibe 102 zwischen den Klemmplatten 20 und 30 einzuklemmen und bei der Darstellung in Figur 5D greifen die Madenschrauben 4 in diejenige Reihe Bohransenkungen der Stegplatte ein, die von der Klemmplatte 30 am weitesten entfernt ausgebildet ist, um die dickste Glasscheibe 103 der drei gezeigten Glasscheiben zwischen den Klemmplatten 20 und 30 einklemmen zu können.

In Figur 5E ist ein montierter Beschlag mit zwei Klemmstücken 1 gezeigt, bei dem eine Glasscheibe 100 zwischen den beiden Klemmplatten 10 der beiden Klemmstücke 1 eingeklemmt ist. Bei dieser Ausführungsform weist jede der Stegplatten 11 der Klemmstücke 1 eine Keil-Nutenanordnung mit mehreren nebeneinander angeordneten Keilnuten 14 auf, die sich parallel zu ihrer jeweiligen Klemmplatte 10 erstrecken. Durch die in der Darstellung rechte Klemmplatte 10 hindurch sind zwei Gewindeschrauben 4 eingeschraubt (sind in der Darstellung überlagert), die mit ihrem freien spitzen Ende jeweils in diejenige Keilnute 14 der Stegplatte 11 des links angeordneten Klemmstückes 1 eingreifen, die der dazugehörenden linken Klemmplatte 10 am nächstliegenden angeordnet ist. Anstatt in die rechts angeordnete Klemmplatte 10 zwei Gewindeschrauben 4 einzuschrauben, ist es jedoch auch möglich, in jede der einander gegenüberliegend angeordneten Klemmplatten 10 jeweils eine Gewindeschraube 4 einzuschrauben, die dann in die entsprechende Keilnute 14 der Stegplatte 11 des jeweils anderen Klemmstückes 1 eingreifen. Bei beiden vorgenannten Ausgestaltungen sind die Klemmstücke 1 an zwei voneinander getrennten Positionen aneinander befestigt, so dass bei beiden Ausgestaltungen eine ausreichend gute Befestigung erzielt wird.

Wie ferner aus der Figur 5E ersichtlich ist, ist jeweils zwischen einer Klemmplatte 10 und der dieser zugewandten Seite der Glasscheibe 100 eine Distanzplatte 6 angeordnet. Diese Distanzplatten 6 dienen einerseits dazu, mögliche Lücken bzw. Spalten zwischen den Klemmplatten 10 und der Glasscheibe 100 auszugleichen bzw. überbrücken zu können und andererseits die Klemmwirkung des Beschlages an der Glasscheibe 100 zu erhöhen, da die Distanzplatten vorzugsweise aus komprimierbarem Material hergestellt sind. Die Distanzplatten 6 können beispielsweise an die Klemmplatten 10 angeklebt werden und weisen dazu vorzugsweise zumindest an einer Seite eine Klebeschicht auf. Ferner ist es möglich, zwischen einer bzw. zwischen jeder der Klemmplatten 10 und der Glasscheibe 100 auch mehr als eine derartige Distanzplatte 6 anzuordnen. Die mehreren Distanzplatten können bei einer solchen Ausgestaltung dann jedoch auch aus unterschiedlichen Materialien hergestellt sein, so dass beispielsweise eine Distanzplatte aus komprimierbaren Material wie z.B. Silikon ist, die an der Glasscheibe anliegt, und eine weitere Distanzplatte, die zwischen der Klemmplatte und der komprimierbaren Distanzplatte angeordnet ist, z.B. aus Metall ist.

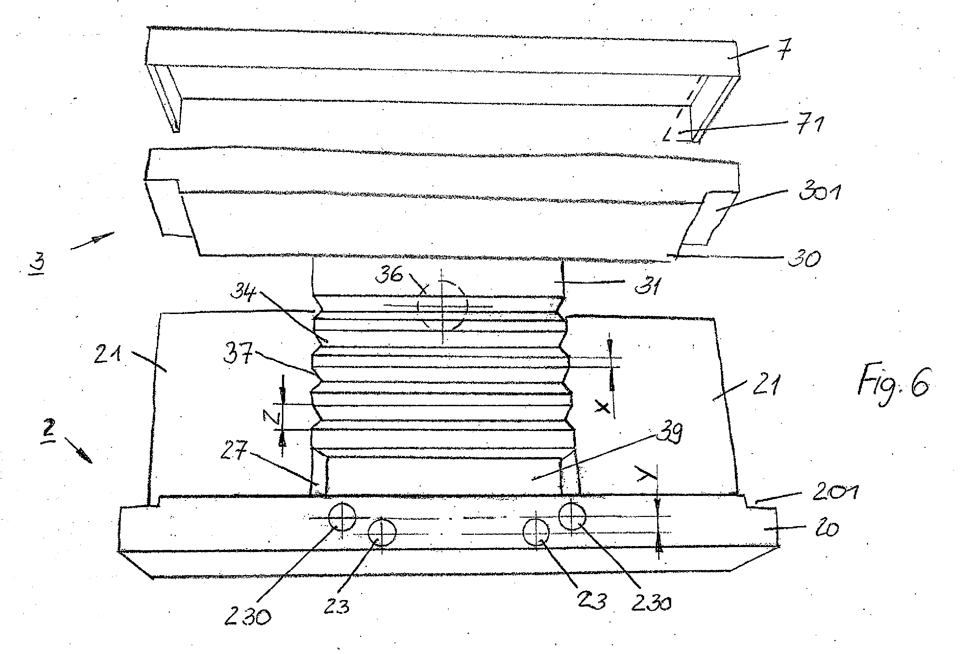

Eine noch andere Ausgestaltung des Beschlages gemäß Figur 2 wird nun anhand der Figur 6 erläutert. Wie aus der Figur 6 ersichtlich ist, weist der Beschlag das Klemmstück 2 auf, das mit zwei Stegplatten 21 ausgestattet ist, die zwischen sich die Aussparung 39 aufweisen, und das Klemmstück 3 auf, bei dem die Stegplatte 31 an einem mittleren Abschnitt vorgesehen ist, die in die Aussparung 39 zwischen den beiden Stegplatten 21 des Klemmstückes 2 eingreift. Die Stegplatte 31 ist mit einer Keil-Nutenanordnung mit einer Mehrzahl Keilnuten 34 versehen, die parallel zu der Klemmplatte 31 verlaufen. Die Keilnuten 34 sind jeweils in einem Abstand X voneinander angeordnet und haben eine Öffnungsweite Z.

In der Klemmplatte 20 sind zwei Befestigungsvorrichtungen vorgesehen, die jeweils zwei gleichgroße Gewindebohrungen 23 und 230 aufweisen, in denen sich die Madenschrauben befinden, die auch bei dieser Ausgestaltung vorzugsweise ein spitz zulaufendes freies Ende haben. Wie zu erkennen ist, ist jeweils die eine Gewindebohrung 23 der einen Befestigungsvorrichtung in einer Ebene angeordnet und die andere Gewindebohrung 230 derselben Befestigungsvorrichtung ist in einer anderen Ebene angeordnet, die von der Ebene der Gewindebohrung 23 in Querrichtung der Klemmplatte 21 um den Betrag Y versetzt ist, wobei vorzugsweise beide Gewindebohrungen 23 bzw. beide Gewindebohrungen 230 jeweils in einer gemeinsamen Ebene angeordnet sind. Der Betrag bzw. Abstand Y zwischen den Gewindebohrungen 23 und 230 einer Befestigungsvorrichtung ist größer als der Abstand X zwischen den einzelnen Keilnuten 34 aber kleiner als die Öffnungsweite Z der Keilnuten. Aufgrund dieser unterschiedlichen Abstände ist gewährleistet, dass zumindest das spitze Ende einer der beiden Madenschrauben einer Befestigungsvorrichtung in eine der Keilnuten 34 eingreift und mit ihrer Kegelmantelfläche an einer der Flanken der Keilnute 34 abgestützt ist. Im günstigsten Fall greift jedoch die Madenschraube in der Gewindebohrung 23 in eine der Keilnuten 34 ein und die Madenschraube in der Gewindebohrung 230 greift in die zu dieser Keilnute 34 benachbarten Keilnute 34 ein. Eine andere Möglichkeit besteht jedoch darin, dass die Madenschraube in der Gewindebohrung 23 an der einen Flanke der einen Keilnute 34 anreift und die Madenschraube in der Gewindebohrung 230 an der anderen Flanke derselben Keilnute 34 angreift. Auf diese Weise kommt eine besonders stabile Befestigung zwischen den beiden Klemmstücken 2 und 3 zustande. Insbesondere dann, wenn, wie in Figur 6 dargestellt ist, zwei solche Befestigungsvorrichtungen ausgebildet sind, ist der Beschlag aufgrund seiner besonders guten Haltekraft zum Klemmbefestigen von vergleichsweise großen Glasscheiben geeignet. Selbst wenn die großen Glasscheiben beispielsweise durch starken Wind druckbelastet werden, kann eine möglicherweise dadurch erfolgte leichte Verformung der Glasscheibe von dem Beschlag ausgehalten bzw. aufgenommen werden, ohne dass die Gefahr besteht, dass durch einseitigen Druck auf das eine Klemmstück die Befestigung gelöst werden könnte.

Wie ferner aus Figur 6 ersichtlich ist, weisen die Stegplatten 21 an den Rändern, welche der Stegplatte 31 zugewandt sind, eine Abschrägung 27 auf und die daran angrenzenden Ränder der Stegplatte 31 weisen eine dazu komplementär ausgebildete Neigung bzw. Abschrägung 37 auf, wodurch auf einfache Weise ein Führungsmittel für das Zusammensetzen der beiden Klemmstücke 2 und 3 gestaltet ist. Außer, dass sich diese Abschrägungen 27, 37 als Führungsmittel eignen, wird aufgrund der Abschrägungen 27, 37 zusätzlich der Effekt bewirkt, dass das Klemmstück 2 gegen ein Bewegen in Richtung der Klemmplattenebene gesperrt ist, auch dann, wenn die Stegplatten 21 bzw. 31 den entsprechenden Gegenabschnitt der anderen Klemmplatten 30 bzw. 20 noch nicht untergriffen haben, wodurch die Montage des Beschlages insgesamt vereinfacht wird.

Zum Festlegen des Beschlages am Fußboden, Fensterrahmen oder dergleichen, ist in der Stegplatte 31 eine Senkbohrung 36 ausgebildet, durch die hindurch eine Senkkopfschraube, deren Kopf in der Stegplatte 31 vollständig versenkt werden kann, zum Festlegen des Beschlages an der entsprechenden Abstützung eingeschraubt werden kann.

Wie ferner in der Figur 6 gezeigt ist, weist der Beschlag Abdeckkappen 7 auf, die die nach außen weisenden Flächen der Klemmplatten 30 und 20 abdeckt. Die Abdeckkappe 7 weist einen gebogenen Rand auf, von dem die freien Seitenränder und die freie obere Schmalseite der Klemmplatte 30 abgedeckt werden. Die Abdeckkappe 7 kann im Klemmsitz auf der Klemmplatte aufsitzen, angeklebt oder auf jede andere mögliche Weise an dieser befestigt werden. Für einen besonders guten einfach gestalteten Halt der Abdeckkappe 7 an der entsprechenden Klemmplatte kann die Abdeckkappe 7 an beiden Seiten auch einen weiteren Klemmabschnitt 71 aufweisen, der parallel zur Rückwand der Abdeckkappe verläuft. Vorzugsweise weisen die Klemmplatten 20, 30 hierfür an ihren Seitenrändern jeweils eine Ausnehmung auf, die von dem Klemmplattenabschnitt 301 bzw. 201 begrenzt wird, der von dem Klemmabschnitt 71 der Abdeckkappe 7 umgriffen wird.

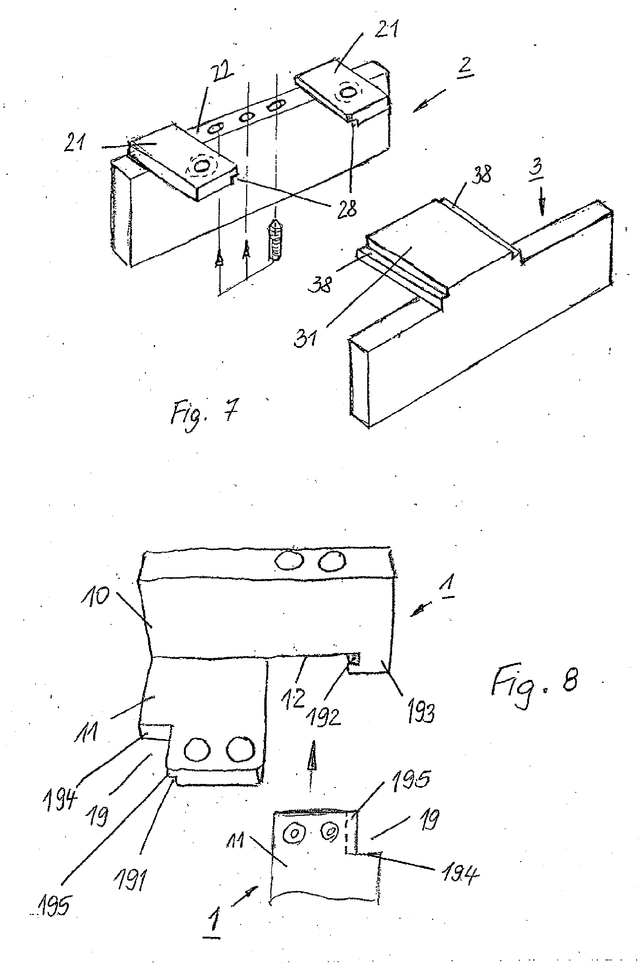

In Figur 7 ist eine weitere Ausgestaltung des Beschlages gemäß Figur 2 dargestellt. Hierbei weisen die Stegplatten 21 des Klemmstückes 2 an ihren einander zugewandten Rändern jeweils eine Längsnute 28 auf, in die jeweils ein komplementär dazu ausgebildeter Ansatz 38, der jeweils an einem freien Seitenrand der Stegplatte 31 des anderen Klemmstückes 3 angeformt ist, eingreifen kann. Das Zusammenwirken der Längsnuten 28 und der beiden Ansätze 38 führt zu einer verbesserten Führung der Klemmstücke 2 und 3 bei deren Montage und hat außerdem den Effekt, dass das Klemmstück 3 an dem Klemmstück 2 so abgestützt wird, dass ein Bewegen in Richtung der Klemmplattenebene verhindert wird, sobald die Stegplatte 31 die freie Unterseite 22 der Klemmplatte 20 untergriffen hat.

In Figur 8 schließlich ist eine weitere Ausgestaltung des Beschlages gemäß Figur 1 dargestellt, der im Wesentlichen aus zwei gleich geformten Klemmstücken 1 gebildet ist. Bei diesem Beschlag weist jede Stegplatte 11 eine Aussparung 19 und ferner eine sich von der Aussparung 19 in Richtung Stegplatteninneres eingeformte Längsnute 191 auf, von der ein Vorsprung 195 gebildet wird, und die sich mindestens entlang der Aussparung 19 erstreckt. Ferner wird die Aussparung 19 zu ihrer Klemmplatte 10 hin von einer Anschlagfläche 194 begrenzt. Auf der anderen Seite derselben Klemmplatte 10 ist an der Unterseite 12 ein Anschlag 193 angeformt, in dem sich ein zur Stegplatte 11 hin offener Schlitz 192 befindet. Beim Zusammensetzen der beiden gleich ausgebildeten Klemmstücke 1 untergreift jeweils eine Stegplatte 11 die Unterseite 12 der anderen Klemmplatte 10, wobei jeder Vorsprung 195 an der einen Stegplatte 11 in den Schlitz 192 in der anderen Klemmplatte 10 eingepasst wird und entlang des Schlitzes 192 gleiten kann. Die beiden Klemmstücke 1 können auf diese Weise soweit zusammengeschoben werden, bis die Anschlagflächen 194 in der jeweiligen Aussparung 19 der Stegplatten 11 an den gegenüberliegenden Anschlag 193 der jeweiligen Klemmplatte 10 anschlagen, wodurch das maximale Ineinanderschieben begrenzt wird. Ferner wird auf diese Weise ein Führungs- bzw. Ausrichtemittel geschaffen, mittels dessen ein Ausrichten und Halten der beiden Klemmstücke 1 in eine bzw. einer gewünschten Lage zueinander bereits vor dem Schraubverstellen der Befestigungsvorrichtung erzielt werden kann, so dass das anschließende Einschrauben der Schrauben der Befestigungsvorrichtung in eine entsprechende Keilnute oder Bohransenkung erleichtert wird.

Alle beschriebenen Klemmstücke, die vorzugsweise aus Aluminium sind, können jeweils als Abschnitte hergestellt werden, die von wenigstens einer durch Strangpressen, Warmziehen oder Kaltwalzen hergestellten L-Profilschiene abgeschnitten werden, die ein Profil haben, das demjenigen der Klemmstücke entspricht. Die Aussparungen können vor oder nach dem Abschneiden der Abschnitte durch Ausstanzen oder Ausschneiden hergestellt werden. Alle anderen vom Grundprofil abweichenden Nuten Vorsprünge, Schlitze können nachträglich hergestellt werden.

Die Gewindebohrungen in den Klemmplatten können auch von Bohrungen gebildet sein, die nicht über ihre gesamte Länge Gewinde aufweisen, solange jeweils eine solche effektive Gewindelänge vorhanden ist, dass die Madenschraube vollständig in die Klemmplatte hineinschraubt werden kann, wobei das Gewinde auf jeden Fall von jener Seite her ausgebildet sein muss, die der Stegplatte zugewandt ist. Ferner weisen alle Madenschrauben an ihrem Ende, das von dem spitzen Endabschnitt abgewandt ist, einen Werkzeugeingriff in Form eines Schlitzes, Innenmehrkants oder dergleichen auf.

## Patentansprüche

1. Beschlag zur Klemmbefestigung einer Glasscheibe, insbesondere einer Oberlicht-Glasscheibe, mit zwei rechtwinklig abgewinkelten Klemmstücken (1, 2, 3), von deren einem Winkelschenkel eine Klemmplatte (10, 20, 30) gebildet wird und von deren anderem Winkelschenkel wenigstens eine Stegplatte (11, 21, 31) neben einer Aussparung gebildet wird, so dass die Klemmstücke (1, 2, 3) beidseitig der Glasscheibe so zusammensetzbar sind, dass die Stegplatte (11, 21, 31) des einen Klemmstückes (1, 2, 3) der Klemmplatte (10, 20, 30) des anderen Klemmstückes (1, 2, 3) zugewandt ist und die Stegplatten (11, 21, 31) der Klemmstücke (1, 2, 3) entlang der Klemmplatten (10, 20, 30) nebeneinander angeordnet sind und jeweils die Klemmplatte (10, 20, 30) des einen Klemmstückes (1, 2, 3) von der Stegplatte (11, 21, 31) des anderen Klemmstückes (1, 2, 3) untergriffen wird, wobei in der Klemmplatte (10, 20, 30) eines der Klemmstücke (1, 2, 3) wenigstens eine Befestigungsvorrichtung angeordnet ist, die bis in den Eingriff in die Stegplatte (11, 21, 31) des anderen Klemmstückes (1, 2, 3) schraubverstellbar ist.

2. Beschlag nach Anspruch 1, **dadurch gekennzeichnet, dass** die Befestigungsvorrichtung in Form einer Schraubbefestigung ausgebildet ist, bei der wenigstens eine Schraube (4) in eine sich parallel zur Klemmplatte (10, 20, 30) des einen Klemmstückes (1, 2, 3) erstreckende Gewindebohrung (23, 230) eingeführt ist und mit ihrem freien Ende in die Oberfläche der Stegplatte (11, 21, 31) des anderen Klemmstückes (1, 2, 3) eingreift, so dass die beiden Klemmstücke (1, 2, 3) miteinander verspannt sind.

3. Beschlag nach Anspruch 1 oder 2, **dadurch gekennzeichnet, dass** in der Stegplatte (11, 21, 31) eines der Klemmstücke (1, 2, 3) eine Keil-Nutanordnung aus wenigstens einer parallel zur Klemmplatte (10, 20, 30) verlaufenden Keilnute (34) angeordnet ist, in die das freie Ende der Schraube (4) eingreift.

4. Beschlag nach Anspruch 3, **dadurch gekennzeichnet, dass** die Keil-Nutenanordnung mehrere nebeneinander angeordnete parallel zur Klemmplatte (10, 20, 30) verlaufende Keilnuten (34) aufweist.

5. Beschlag nach Anspruch 1 oder 2, **dadurch gekennzeichnet, dass** die Schraube (4) in in der Stegplatte (11, 21, 31) ausgebildete Bohransenkungen (33) eingreift.

6. Beschlag nach einem der Ansprüche 1, 2 oder 5, **dadurch gekennzeichnet, dass** jede der Klemmplatten (10, 20, 30) wenigstens eine Gewindebohrung (23, 230) aufweist, in die eine Schraube (4) eingeführt ist.

7. Beschlag nach Anspruch 1, **dadurch gekennzeichnet, dass** die Befestigungsvorrichtung wenigstens eine Schraube (4) aufweist, die in der Klemmplatte (10, 20, 30) in einer sich parallel zur Stegplatte (11, 21, 31) erstreckenden Gewindebohrung (24) angeordnet ist und mit ihrem freien Ende einen Rollkörper (5) in einer in der Klemmplatte (10, 20, 30) ausgebildeten, mit der Gewindebohrung (24) in Verbindung stehenden weiteren Bohrung (25) in eine in der Stegplatte (11, 21, 31) des anderen Klemmstückes (1, 2, 3) ausgebildeten Keilnute (34) oder Bohransenkung (33) drückt, so dass die beiden Klemmstücke (1, 2, 3) miteinander verspannt sind.

8. Beschlag nach einem der Ansprüche 1 bis 7, **dadurch gekennzeichnet, dass** die Stegplatte (21) des einen Klemmstückes (2) eine Längsnute (28) aufweist, in die ein entsprechender Ansatz (38) in dem anderen Klemmstück (3) eingreift.

9. Beschlag nach Anspruch 8, **dadurch gekennzeichnet, dass** die Stegplatte (11) eine Aussparung (19) aufweist, deren parallel zur Klemmplatte (10) des anderen Klemmstückes (1) verlaufende Kante (194) als Anschlag an diesem Klemmstück (1) dient.

10. Beschlag nach Anspruch 3, 4 oder 8, **dadurch gekennzeichnet, dass** in der Klemmplatte (10, 20, 30) wenigstens zwei Schrauben (4) in zwei in Querrichtung der Klemmplatte (10, 20, 30) gegeneinander versetzten Ebenen angeordnet sind, wobei die beiden Ebenen einen Abstand (Y) voneinander haben, der kleiner als die Öffnungsweite (Z) der Keilnute (34) ist.

11. Beschlag nach Anspruch 5, 6 oder 8, **dadurch gekennzeichnet, dass** in der Klemmplatte (10, 20, 30) wenigstens zwei Schrauben (4) in zwei in Querrichtung der Klemmplatte (10, 20, 30) gegeneinander versetzten Ebenen angeordnet sind, wobei die beiden Ebenen einen Abstand (Y) voneinander haben, der kleiner als der Durchmesser aber größer als der halbe Durchmesser der Öffnungsweite der keilförmigen Bohransenkung (33) ist.

12. Beschlag nach einem der Ansprüche 1 bis 11, **dadurch gekennzeichnet, dass** eines der Klemmstücke (2) zwei Stegplatten (21) aufweist, die in Längsrichtung des Klemmstückes (2) gegeneinander versetzt sind, und dass die Stegplatte (31) des anderen Klemmstückes (3) in den Zwischenraum (39) zwischen den beiden Stegplatten (21) eingreift.

13. Beschlag nach Anspruch 12, **dadurch gekennzeichnet, dass** alle Stegplatten (11, 21, 31) mit einer Keil-Nutanordnung aus mehreren parallel in den Stegplatten (11, 21, 31) verlaufenden Keilnuten (34) versehen sind.

14. Beschlag nach Anspruch 13, **dadurch gekennzeichnet, dass** die Keilnuten (34) in jeder Stegplatte (11, 21, 31) des einen Klemmstückes (1, 2, 3) eine andere Öffnungsweite (Z) haben als die Keilnuten in jeder Stegplatte (11, 21, 31) des anderen Klemmstückes (1, 2, 3).

15. Beschlag nach einem der Ansprüche 1 bis 14, mit zwischen den Klemmplatten (10, 20, 30) eingesetzter Glasscheibe (100), **dadurch gekennzeichnet, dass** jeweils zwischen der Klemmplatte (10, 20, 30) und der Glasscheibe (100) eine Distanzplatte (6) angeordnet ist.

16. Beschlag nach Anspruch 15, **dadurch gekennzeichnet, dass** die Distanzplatte (6) aus einem komprimierbaren Kunststoff hergestellt ist.

17. Beschlag nach einem der Ansprüche 1 bis 16, **dadurch gekennzeichnet, dass** die nach außen weisenden Flächen der Klemmplatten (10, 20, 30) mit einer Abdeckkappe (7) abgedeckt sind.

18. Beschlag nach einem der Ansprüche 1 bis 17, **dadurch gekennzeichnet, dass** eine der Stegplatten (11, 21, 31) an einem Rahmenteil einer Tür oder Fenster befestigt ist.

19. Beschlag nach einem der Ansprüche 1 bis 17, **dadurch gekennzeichnet, dass** eine der Stegplatten (11, 21, 31) am Fußboden oder an der Decke eines Raumes befestigt ist.

20. Beschlag nach einem der Ansprüche 1 bis 19, **dadurch gekennzeichnet, dass** die Klemmstücke (1, 2, 3) vorzugsweise aus Aluminium hergestellt sind.

21. Verfahren zum Herstellen eines Beschlages zur Klemmbefestigung einer Glasscheibe, insbesondere einer Oberlicht-Glasscheibe, wobei der Beschlag zwei rechtwinklig abgewinkelte Klemmstücke hat, von deren einem Winkelschenkel eine Klemmplatte und von deren anderem Winkelschenkel wenigstens eine Stegplatte gebildet wird, über welche die Klemmplatte in ihrer Längsrichtung entlang einer Aussparung des anderen Winkelschenkels hinausragt, so dass die Klemmstücke beidseitig der Glasscheibe so zusammensetzbar sind, dass die Stegplatte des einen Klemmstückes der Klemmplatte des anderen Klemmstückes zugewandt ist und die Stegplatten der Klemmstücke entlang der Klemmplatten nebeneinander angeordnet sind und die Klemmplatte des einen Klemmstückes von der Stegplatte des anderen Klemmstückes in einer Aussparung der Klemmplatte untergriffen wird, **dadurch gekennzeichnet, dass** die Klemmstücke als Abschnitte hergestellt werden, die von wenigstens einer durch Strangpressen, Warmziehen oder Kaltwalzen hergestellten L-Profilschiene abgeschnitten werden, die ein Profil haben, das demjenigen der Klemmstücke entspricht, wobei die Aussparungen vor oder nach dem Abschneiden der Abschnitte durch Ausstanzen oder Ausschneiden hergestellt werden.

22. Verfahren nach Anspruch 18, **dadurch gekennzeichnet, dass** bei der Herstellung wenigstens einer der L-Profilschienen in deren die Stegplatte bildenden Profilschenkel wenigstens eine Keilnute parallel zur Klemmplatte ausgebildet wird.
